# FASCICULE DE BREVET EUROPEEN

(11) **EP 4 229 612 B1**
(45) Date de publication et mention de la délivrance du brevet: **28.01.2026**
(21) Numéro de dépôt: 21805567.1
(22) Date de dépôt: 14.10.2021
(51) Int. Cl.: G06V 20/52, G06V 30/14, G08G 1/01, G08G 1/017, G08G 1/04, G05D 1/00, E04H 6/12, E04H 6/42, E04H 6/34, E01F 9/00

(54) **SYSTÈME D'IDENTIFICATION DE VÉHICULE EN CENTRE LOGISTIQUE ROBOTISÉ**
SYSTEM ZUR FAHRZEUGIDENTIFIKATION IN EINEM AUTOMATISIERTEN LOGISTIKZENTRUM
SYSTEM FOR VEHICLE IDENTIFICATION IN AN AUTOMATED LOGISTICS CENTRE

(30) Priorité: 16.10.2020 FR 2010617
(43) Date de publication de la demande: 23.08.2023
(73) Titulaire: Stanley Robotics, 78000 Versailles (FR)
(72) Inventeur: CORD, Aurélien, 75014 PARIS (FR); LIPS, Mathieu, 75002 PARIS (FR)
(74) Mandataire: IP Trust
(86) Numéro de dépôt international: PCT/FR2021/051786
(87) Numéro de publication internationale: WO 2022/079391

(56) Documents cités:
- WO-A1-2004/045932
- US-A- 5 764 163
- US-A1- 2007 031 218
- US-A1- 2014 271 062

## Description

### Domaine de l'invention

La présente invention concerne le domaine des dispositifs et/ou procédé de gestion de zones de stockage de véhicules automobiles ou d'aires de stationnement.

### État de la technique

Dans l'état de la technique, il est connu de lire, par une caméra, la plaque d'immatriculation de chaque véhicule entrant et sortant d'une aire de stationnement.

Le brevet US20140271062 décrit un système d'ascenseur pour passagers et véhicules
transporte un véhicule contenant au moins un passager jusqu'à une place de stationnement souhaitée dans un bâtiment à plusieurs étages. Le système d'ascenseurs pour passagers et véhicules comprend une pluralité de cabines d'ascenseur disposées sensiblement à égale distance d'un puits central du bâtiment. Chaque cabine d'ascenseur comprend un boîtier et au moins une porte. Le boîtier de cabine d'ascenseur a un plancher, un plafond et au moins une paroi latérale. La cabine d'ascenseur est dimensionnée et configurée pour transporter un véhicule et au moins un passager. Les informations relatives à l'emplacement de stationnement sont lues à partir du véhicule par un capteur externe, tel qu'un capteur RFID, un lecteur de code à barres, ou similaire.

La demande de brevet US 2007031218 décrit un système et un procédé pour le stockage et la récupération automatisés de véhicules, de conteneurs et de bateaux dans un parc de stationnement à plusieurs étages. Ce système utilise des moyens de réception configurés pour recevoir des données d'identification qui sont attribuées de manière unique à chaque véhicule associé à l'accès à la zone de transfert de véhicules.

### Inconvénient de l'art antérieur

Dans le cadre d'une aire de stationnement présentant des véhicules neufs, ces derniers ne possèdent pas de plaques d'immatriculation contrairement aux véhicules déplacés dans les solutions de l'art antérieur.

Le brevet US20140271062 et le brevet US2007031218 ne concernent pas l'identification d'un véhicule, mais l'identification d'une place de stationnement par un véhicule déjà identifié par sa plaque d'immatriculation.

Il est ainsi désireux de proposer une solution d'identification simple et peu coûteuse dans le cas de zones de stockage de véhicules automobiles ou des aires de stationnement de véhicules neufs.

Le problème technique à résoudre est d'assurer l'identification d'un véhicule neuf, non encore immatriculé, en vue de son déplacement automatique vers un emplacement qui lui est destiné, sans intervention sur le véhicule, de manière sûre, exploitable à distance et ne nécessitant pas modification du véhicule.

### Solution apportée par l'invention

La présente invention concerne selon son acceptation la plus générale un système de gestion de zones de stockage de véhicules automobiles ou d'une aire de stationnement de véhicules automobiles comportant une caméra, présentant les caractéristiques techniques énoncés par la revendication 1 ou les revendications dépendantes.
On entendra par "support volant" au sens du présent brevet un support facilement déplaçable pour être déposé dans un véhicule ou retiré du véhicule, sans outillage ni liaison irréversible.
On entendra par "caméra" au sens du présent brevet un moyen d'acquisition d'image, notamment un capteur d'image, un dispositif de balayage infrarouge.
Le moyen de communication est constitué par un lien de communication sans fil entre le portique et un système centralisé lui-même connecté aux convoyeurs robotiques dont il a la gestion.
Le portique pourra comprendre plusieurs dispositifs de détection/lecture de code barre ou QR code/ de manière à bien entourer le véhicule

Le système de gestion selon l'invention une solution simple, peu coûteuse, réutilisable car les supports et les identifiants associés peuvent être ré-attribués.

De préférence, chaque support physique est une feuille de papier. Chaque feuille de papier est posée sur le tableau de bord du véhicule et près du pare-brise ou collée sur une vitre latérale. Par exemple, le format de la feuille de papier est du type A4 (21 centimètres par 29,7 centimètres).

Avantageusement, l'identifiant optique unique est imprimé sur au moins 50% de la surface du support physique. Cette caractéristique permet de rendre l'identifiant plus visible et/ou distinctif pour la caméra.

Selon une variante de réalisation, le système comprend un moyen d'éclairage prévu pour éclairer un véhicule.

Le système comprend un bâti portant au moins une caméra. Le bâti peut aussi porter le moyen d'éclairage.

Le bâti est un portique permettant le passage d'un véhicule. On entend par portique, deux pieds verticaux reliés entre eux par un longeron horizontal. Les pieds verticaux présentent une longueur supérieure ou égale à la hauteur d'un véhicule automobile. La caméra et éventuellement le moyen d'éclairage peuvent être portés par le longeron horizontal du portique ou l'un ou les 2 montants verticaux.

Selon une variante de réalisation, le bâti est une barre verticale. La caméra et le moyen d'éclairage peuvent être portés au sommet de la barre verticale.
Selon un mode de mise en œuvre particulier, ledit système comprend en outre au moins un convoyeur de véhicule muni d'un moyen de communication pour la réception des instructions de déplacement en fonction de l'identifiant unique acquis par un caméra et traité par un moyen d'analyse. Le convoyeur peut être une plateforme robotisée munie d'un dispositif de communication.

### Description de la figure

La présente invention sera mieux comprise à la lecture de la description qui suit, se référant à un exemple non limitatif de réalisation illustré par les dessins annexés où
[fig.1] la figure 1 montre un système de gestion d'une aire de stationnement selon un premier mode de réalisation, le système comprenant un portique portant une caméra, un moyen d'éclairage, un moyen d'analyse et un moyen de communication sans fil, la caméra filmant un identifiant optique unique placé à l'intérieur d'un véhicule automobile transporté par un convoyeur de véhicule.
[fig.2] la figure 2 montre un système de gestion d'une aire de stationnement selon un deuxième mode de réalisation, le système comprenant en outre un rideau optique unique
[fig.3] la figure 3 montre un système de gestion d'une aire de stationnement selon un troisième mode de réalisation, le système comprenant en outre un rideau optique double
[fig.4] la figure 4 montre un système de gestion d'une aire de stationnement selon un quatrième mode de réalisation, le système comprenant en outre une caméra de détection verticale.

### Description d'un mode de réalisation

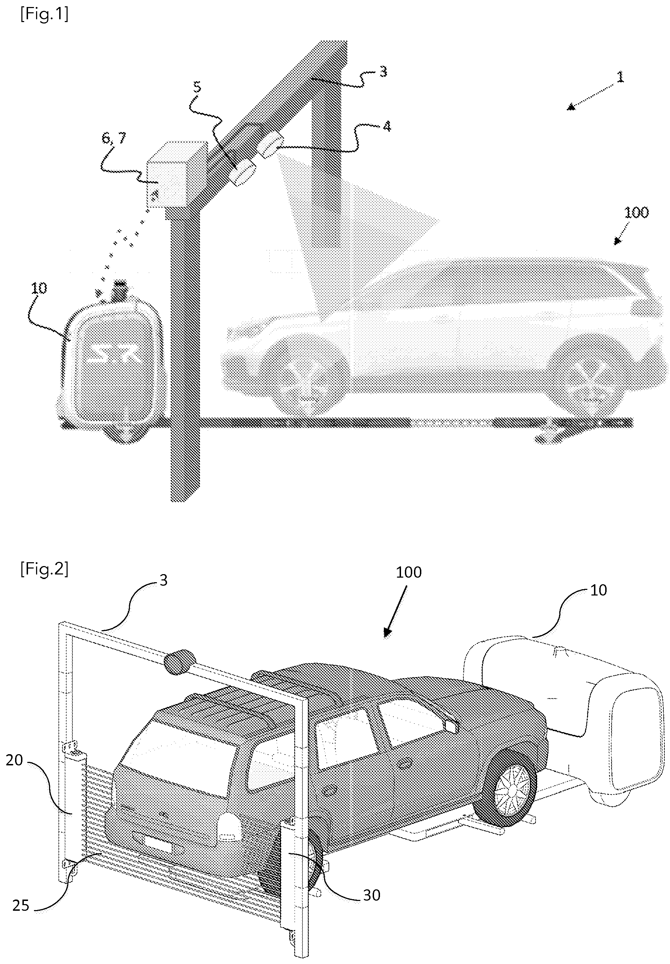

La figure 1 montre un système ou un dispositif 1 de gestion de zones de stockage de véhicules automobiles ou d'une aire de stationnement de véhicules automobiles.

Le système comprend un convoyeur 10 électrique de véhicule agencé pour déplacer ou transporter un véhicule automobile 100. Chaque convoyeur est agencé et/ou programmé pour parcourir une aire de stationnement présentant des véhicules automobiles en attente de livraison, en l'espèce des véhicules neufs ne comprenant pas de plaques d'immatriculation, et transporter un véhicule de la zone de stockage de l'aire de stationnement vers la zone de transfert de l'aire de stationnement.

En outre, chaque véhicule automobile comprend un support, par exemple une feuille de papier sur laquelle est imprimé un identifiant unique, le support étant placé sur le tableau de bord ou collé sur une vitre de manière à être visible à travers le pare-brise depuis l'extérieur du véhicule (non représenté). L'identifiant unique est un code-barres ou un QR code^{®}.

Le système comprend un portique 3 portant une caméra 4 et un moyen d'éclairage 5. La caméra 4 et le moyen d'éclairage 5 sont dirigés vers le pare-brise du véhicule, lorsque celui-ci se présente, par l'intermédiaire d'un convoyeur 10, devant le portique. La caméra 4 est agencée pour lire ou scanner l'identifiant unique.

Le système comprend un moyen d'analyse 6. Le moyen d'analyse 6 est relié à la caméra 4 et agencé pour exécuter un programme d'analyse de l'image transmise par la caméra 4 pour extraire ledit identifiant optique unique. Lorsqu'un convoyeur passe sous le portique avec un véhicule, le code lu par la caméra est communiqué au moyen d'analyse afin de l'associer au véhicule.

Le système de gestion comprend en outre une base de données dans laquelle chaque identifiant unique est associé à une adresse de destination. Un moyen de communication sans fil 7 entre le moyen d'analyse 6 et chaque convoyeur permet de transmettre audit convoyeur un message numérique indiquant l'adresse de destination du véhicule transporté par ledit convoyeur.

L'utilité d'un tel système est particulièrement importante dans le cas de manipulation de véhicule non encore immatriculé comme c'est le cas typiquement sur les sites de logistique de véhicules neufs.

### Variantes de réalisation

Les figures 2 à 4 illustrent une variante de réalisation où le système intègre une fonctionnalité de mesure de la longueur du véhicule.

Selon ces trois variantes, le portique (3) comporte un moyen optique interagissant avec une extrémité frontale du véhicule pour permettre à l'occasion du passage du véhicule (100) dans le portique, de connaître sa longueur de manière automatique.

Selon la variante illustrée par la figure 2, le portique (3) comporte une rampe verticale (20) comportant des sources optiques orientées transversalement, en direction d'une deuxième rampe (30) comportant des photodétecteurs pour former une barrière lumineuse (25) occulté lors du passage d'un véhicule.

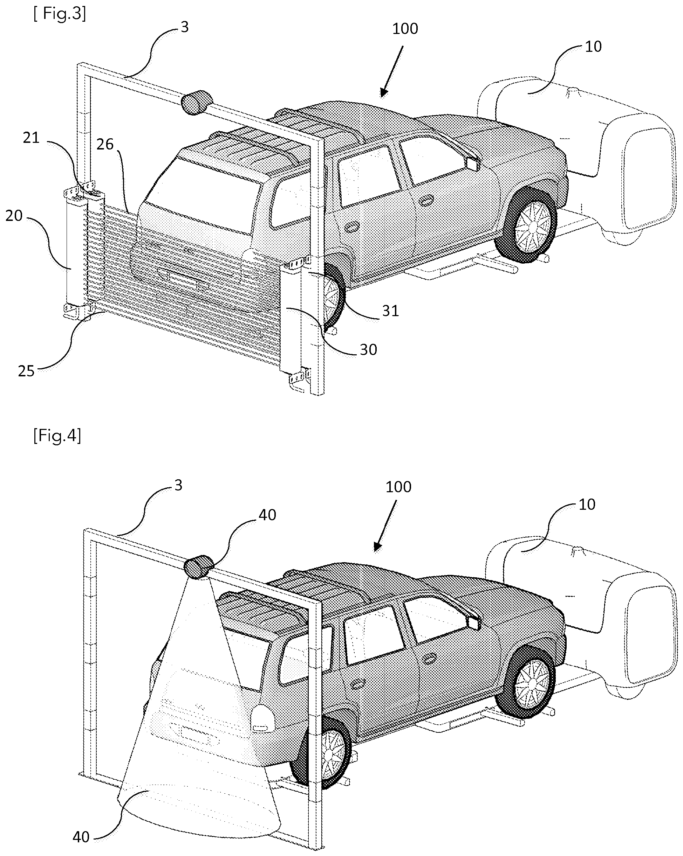

Selon la variante illustrée par la figure 3, le portique (3) comporte deux rampes (20, 21) de sources lumineuses et deux rampes (30, 31) de photodétecteurs pour former une double barrière (25, 26). Cette variante permet de détecter automatiquement le sens de déplacement.

Selon la variante illustrée par la figure 4, le portique (3) comporte une caméra (40) disposée verticalement dans l'exemple décrit pour détecter le passage de l'extrémité arrière du véhicule (100).

La détection du passage de l'extrémité arrière puis de l'extrémité avant du véhicule (ou vice-versa) (100) déplacé par le convoyeur (10) permet de déduire la longueur du véhicule (100) par exploitation des perturbations occasionnée sur la ou les barrières lumineuses ou sur le faisceau de la caméra (40).

Quand un robot (10) prend une voiture (100) dans une zone de handover il doit passer sous un portique (passage obligé entre la zone de handover et la zone de stockage).

Lors d'un passage au ralenti sous le portique, on acquiert grâce à la barrière optique ou la caméra (40) la localisation de la face invisible du véhicule (100) passant sous le portique (3) et on déduit la longueur véhicule par conjonction avec la localisation du robot (10) au moment où la face invisible franchit la verticale du portique (3).

## Revendications

1. Système de gestion (1) d'une aire de stationnement de véhicules automobiles comprenant un moyen d'identification de véhicules et au moins un convoyeur (10) de véhicule agencé et/ou programmé pour parcourir une aire de stationnement et ledit moyen d'identification comprenant :
• une pluralité de supports physiques facilement déplaçables pour être déposés dans un véhicule ou retirés du véhicule, sans outillage ni liaison irréversible portant un identifiant optique unique du type code-barres ou QR code^{®}, chaque support physique étant disposé sur ou dans un véhicule automobile,
• au moins un capteur (4) agencé pour acquérir l'information inscrite dans lesdits supports physiques desdits véhicules,
• un moyen d'analyse (6) relié à l'au moins un capteur (4), ledit moyen d'analyse (6) exécutant un programme d'analyse de l'information transmise par ledit capteur (4) pour extraire ledit identifiant optique unique du type code-barres ou QR code^{®},
• un moyen de communication sans fil (7) entre le moyen d'analyse (6) et l'au moins un convoyeur (10) déplaçant ou transportant le véhicule associé audit identifiant optique unique, de manière à transmettre à l'au moins un convoyeur (10) un message numérique indiquant l'adresse de destination du véhicule (100),
le système comprenant un portique (3) portant au moins l'un desdits capteurs (4) et permettant le passage d'un véhicule, ledit portique comportant un moyen de détection du passage d'une extrémité frontale du véhicule (100) déplacé par ledit convoyeur (10),
ledit moyen de détection étant constitué par une barrière lumineuse (25) formée par une rampe (20) de sources lumineuses orientée vers une rampe (30) de photodétecteur, lesdites rampes (20, 30) étant disposées de part et d'autre dudit portique (3).

2. Système de gestion selon la revendication 1, **caractérisé en ce que** chaque support physique est une feuille de papier portant une inscription codant un identifiant unique et **en ce que** ledit capteur (4) est une caméra.

3. Système de gestion selon la revendication 1 ou 2, **caractérisé en ce qu'**il comprend un moyen d'éclairage (5) prévu pour éclairer un véhicule (100).

4. Système de gestion selon l'une des revendications 1 à 3, **caractérisé en ce que** l'au moins un convoyeur (10) de véhicule comprend un moyen de communication pour la réception des instructions de déplacement en fonction de l'identifiant unique acquis par l'au moins un capteur (4) et traité par le moyen d'analyse (6).

5. Système de gestion selon l'une des revendications 1 à 4, **caractérisé en ce que** ledit moyen de détection du passage d'une extrémité frontale du véhicule (100) est constitué par une barrière lumineuse double (25, 26) formée par deux rampes (20, 21) de sources lumineuses orientée vers deux rampes (30, 31) de photodétecteur, lesdites rampes (20, 21 ; 30, 31) étant disposées de part et d'autre dudit portique (3).

## Patentansprüche

1. Verwaltungssystem (1) für einen Parkplatz für Kraftfahrzeuge, das ein Fahrzeugidentifikationsmittel und mindestens einen Fahrzeugförderer (10) umfasst, der so angeordnet und/oder programmiert ist, dass er einen Parkplatz durchfährt, und wobei das Identifikationsmittel Folgendes umfasst:
• eine Vielzahl von physischen Medien, die leicht beweglich sind, um in ein Fahrzeug eingelegt oder aus dem Fahrzeug entfernt zu werden, ohne Werkzeuge oder irreversible Verbindungen, die eine eindeutige optische Kennung des Typs Barcode oder QR-Code tragen, wobei jedes physische Medium auf oder in einem Kraftfahrzeug angeordnet ist,
• mindestens einen Sensor (4), der so angeordnet ist, dass er die in den physischen Medien der Fahrzeuge eingetragenen Informationen erfasst,
• ein Analysemittel (6), das mit dem mindestens einen Sensor (4) verbunden ist, wobei das Analysemittel (6) ein Programm zur Analyse der von dem Sensor (4) übertragenen Information ausführt, um die eindeutige optische Kennung vom Typ Barcode oder QR-Code zu extrahieren,
• ein drahtloses Kommunikationsmittel (7) zwischen dem Analysemittel (6) und dem mindestens einen Förderer (10), der das mit der eindeutigen optischen Kennung verbundene Fahrzeug bewegt oder transportiert, so dass es dem mindestens einen Förderer (10) eine digitale Nachricht überträgt, die die Zieladresse des Fahrzeugs (100) angibt,
wobei das System einen Portalrahmen (3) umfasst, der mindestens einen der Sensoren (4) trägt und das Passieren eines Fahrzeugs ermöglicht, wobei der Portalrahmen ein Mittel zur Erkennung des Passierens eines vorderen Endes des Fahrzeugs (100) umfasst, das von dem Förderer (10) bewegt wird,
wobei das Erkennungsmittel aus einer Lichtschranke (25) besteht, die aus einem Gestänge (20) mit Lichtquellen gebildet wird, die auf ein Gestänge (30) mit Fotodetektoren ausgerichtet ist, wobei die Gestänge (20, 30) auf beiden Seiten des Portalrahmens (3) angeordnet sind.

2. Verwaltungssystem nach Anspruch 1, **dadurch gekennzeichnet, dass** jedes physische Medium ein Blatt Papier ist, das eine Eintragung trägt, die eine eindeutige Kennung codiert, und dass der Sensor (4) eine Kamera ist.

3. Verwaltungssystem nach Anspruch 1 oder 2, **dadurch gekennzeichnet, dass** es ein Beleuchtungsmittel (5) umfasst, das zur Beleuchtung eines Fahrzeugs (100) vorgesehen ist.

4. Verwaltungssystem nach einem der Ansprüche 1 bis 3, **dadurch gekennzeichnet, dass** der mindestens eine Fahrzeugförderer (10) ein Kommunikationsmittel zum Empfangen von Bewegungsanweisungen in Abhängigkeit von der von dem mindestens einen Sensor (4) erfassten und von dem Analysemittel (6) verarbeiteten eindeutigen Kennung umfasst.

5. Verwaltungssystem nach einem der Ansprüche 1 bis 4, **dadurch gekennzeichnet, dass** das Mittel zur Erkennung des Passierens eines vorderen Endes des Fahrzeugs (100) aus einer doppelten Lichtschranke (25, 26) besteht, die aus zwei Gestängen (20, 21) mit Lichtquellen gebildet wird, die auf zwei Gestänge (30, 31) mit Fotodetektoren ausgerichtet sind, wobei die Gestänge (20, 21; 30, 31) auf beiden Seiten des Portalrahmens (3) angeordnet sind.

## Claims

1. System (1) for managing a parking area for motor vehicles comprising a vehicle identification means and at least one vehicle conveyor (10) arranged and/or programmed to travel through a parking area, and said identification means comprising:
• a plurality of easily movable physical media that can be deposited in or removed from a vehicle without the need for tools or irreversible connections, bearing a unique optical identifier such as a barcode or QR code, each physical medium being disposed on or within a motor vehicle,
• at least one sensor (4) configured to capture the information recorded on said physical media of said vehicles,
• an analysis means (6) connected to the at least one sensor (4), said analysis means (6) executing a program for analysing the information transmitted by said sensor (4) in order to extract said unique optical identifier of the barcode or QR code type,
• a means (7) for wireless communication between the analysis system (6) and the at least one conveyor (10) moving or transporting the vehicle associated with the said unique optical identifier, in order to transmit to the at least one conveyor (10) a digital message indicating the destination address of the vehicle (100),
the system comprising a portal (3) carrying at least one of said sensors (4) and allowing a vehicle to pass, said portal comprising a means for detecting the passage of the front end of the vehicle (100) moved by said conveyor (10),
said detection means consisting of a light barrier (25) formed by an array (20) of light sources directed towards an array (30) of photodetectors, said arrays (20, 30) being disposed on either side of said portal (3).

2. Management system according to claim 1, **characterised in that** each physical medium is a sheet of paper bearing an inscription encoding a unique identifier and **in that** said sensor (4) is a camera.

3. Management system according to claim 1 or 2, **characterised in that** it comprises an illumination means (5) provided for illuminating a vehicle (100).

4. Management system according to one of claims 1 to 3, **characterised in that** the at least one vehicle conveyor (10) comprises a communication means for receiving movement instructions based on the unique identifier acquired by the at least one sensor (4) and processed by the analysis means (6).

5. Management system according to one of claims 1 to 4, **characterised in that** said means for detecting the passage of the front end of the vehicle (100) consists of a double light barrier (25, 26) formed by two arrays (20, 21) of light sources directed towards two arrays (30, 31) of photodetectors, said arrays (20, 21; 30, 31) being disposed on either side of said portal (3).
